# EUROPEAN PATENT APPLICATION

(11) **EP 4 640 603 A1**
(43) Date of publication of application: **29.10.2025**
(21) Application number: 24852245.0
(22) Date of filing: 05.08.2024
(51) Int. Cl.: B65H 19/12, B65H 19/30, B65H 75/24, H01M 4/04, H01M 10/04, B65G 15/00, B65G 35/00, B65G 23/00

(54) **ELECTRODE ROLL REPLACEMENT SYSTEM**

(30) Priority: 08.08.2023 KR 20230103497
(71) Applicant: LG Energy Solution, Ltd., Seoul 07335 (KR)
(72) Inventor: KIM, Dong Beom, Daejeon 34122 (KR)
(74) Representative: Plasseraud IP
(86) International application number: PCT/KR2024/011464
(87) International publication number: WO 2025/033891

(57) **Abstract**

The disclosed electrode roll replacement system including: an air chuck shaft in the form of a cantilever, comprising a first transfer mechanism installed inside a hollow with a longitudinal direction of a shaft as a transfer direction, and exposing a first transfer surface of the first transfer mechanism on its surface; and an electric cart provided with a transportation shaft in the form of a cantilever, including a second transfer mechanism installed inside a hollow with a longitudinal direction of a shaft as a transfer direction, and exposing a second transfer surface of the second transfer mechanism on its surface, wherein the first and second transfer mechanisms are electrically operated to exchange bobbins between the air chuck shaft and the transport shaft, with the transport shaft of the electric cart concentrically aligned with the air chuck shaft.

## Description

### [Technical Field]

The present disclosure relates to an electrode roll replacement system that enables the replacement of a heavy electrode roll on an air chuck shaft in the production process of a secondary battery transferring an electrode in a roll-to-roll manner to be performed easily and without human intervention.

This application claims the benefit of priority from Korean Patent Application No. 10-2023-0103497, filed on Aug. 8, 2023, the disclosures of which are incorporated herein by reference.

### [Background]

Unlike primary batteries, secondary batteries are rechargeable and have been heavily researched and developed in recent years due to their potential for miniaturization and large capacity. The demand for secondary batteries as an energy source is increasing rapidly due to technological developments and the growing demand for mobile devices, as well as electric vehicles and energy storage systems, which are becoming increasingly important in response to the need to protect the environment.

Secondary batteries are categorized into coin-type batteries, cylindrical batteries, prismatic batteries, and pouch-type batteries based on the shape of the battery case. In a secondary battery, the electrode assembly, which is mounted inside the battery case, is a charge and dischargeable power generation device consisting of a stacked structure of electrodes and separators.

Electrode assemblies can be roughly categorized into Jellyroll type, in which a positive electrode and a negative electrode of a sheet-type applied with an active material are wound with a separator interposed therebetween, Stack-type, in which multiple positive electrodes and negative electrodes are sequentially stacked with a separator interposed therebetween, and Stack & Folding type, in which unit cells are stacked with a long separator film wound.

An electrode is manufactured by coating an active material on a current collector to form an electrode sheet, notching the electrode sheet, winding it onto a bobbin and drying it, and unwinding the electrode sheet wound onto the bobbin and cutting it into a certain size. In this way, the various processes for processing the electrodes of secondary batteries are carried out continuously in a roll-to-roll manner, and the electrode rolls are loaded and unloaded on the air chuck shaft of the unwinder and rewinder.

Conventional electrode rolls of common sizes have been replaced by being transported on an electric cart and pushed onto the air chuck shaft by an operator. As equipment speeds increase, the replacement cycle of electrode rolls is shortened, and the larger the winding amount of the electrode roll, the longer the replacement cycle, increasing equipment utilization, but there are limits to increasing the winding amount due to the weight limitations of the manpower required to replace the electrode rolls.

### [Summary]

### [Technical Problem]

The purpose of the present disclosure is to provide an electrode roll replacement system that can increase the winding amount of electrode rolls free from weight limitations and improve equipment utilization by establishing an automated system that uses power to replace human labor when replacing electrode rolls on the air chuck shaft of an unwinder and rewinder.

However, the technical problems that the present disclosure seeks to address are not limited to the problems described above, and other problems not mentioned will be apparent to those of ordinary skill in the art from the description of the disclosure set forth below.

### [Technical Solution]

The present disclosure relates to an electrode roll replacement system, which in one example includes: an air chuck shaft in the form of a cantilever, comprising a first transfer mechanism installed inside a hollow with a longitudinal direction of a shaft as a transfer direction, and exposing a first transfer surface of the first transfer mechanism on its surface; and an electric cart provided with a transportation shaft in the form of a cantilever, comprising a second transfer mechanism installed inside a hollow with a longitudinal direction of a shaft as a transfer direction, and exposing a second transfer surface of the second transfer mechanism on its surface, wherein the first and second transfer mechanisms are electrically operated to exchange bobbins between the air chuck shaft and the transport shaft, with the transport shaft of the electric cart concentrically aligned with the air chuck shaft.

In one embodiment, the first and second transfer mechanisms are each a conveyor belt, wherein movement of the bobbin occurs by frictional forces acting between the conveyor belt and an inner circumferential surface of the bobbin.

**In** another embodiment, the first and second transfer mechanisms are each a plurality of pinion gears, wherein movement of the bobbin occurs by engagement of the pinion gear with a rack gear formed on an inner circumferential surface of the bobbin.

Here, the plurality of pinion gears may include at least one drive gear and at least one driven gear rotating in direct or indirect engagement with the drive gear.

**In** addition, the plurality of pinion gears is disposed in a row along a longitudinal direction of the shaft, wherein odd-numbered pinion gears or even-numbered pinion gears may form the first and second transfer surfaces.

**In** such embodiment of the present disclosure, the transport shaft of the electric cart is docked and interconnected with the air chuck shaft, wherein the relative position of docking of the air chuck shaft with the transport shaft of the electric cart is limited to a predetermined position, and the first and second transfer surfaces are aligned accordingly.

Meanwhile, the first and second transfer mechanisms may be powered by power sources independent of each other.

Alternatively, power to operate the first and second transfer mechanisms may be supplied from a power source of the electric cart.

For example, by docking the transport shaft of the electric cart with the air chuck shaft, power of a power source from the electric cart may be supplied to the first transfer mechanism.

**In** addition, the relative position of docking of the air chuck shaft with the transport shaft of the electric cart is limited to a predetermined position, wherein the first and second transfer surfaces may be aligned and power of the power source from the electric cart may be supplied to the first transfer mechanism by the docking of the air chuck shaft with the transport shaft of the electric cart.

### [Advantageous Effects]

The electrode roll replacement system of the present disclosure, having the configuration as described above, includes an air chuck shaft provided in the unwinder or rewinder, and a transport shaft of an electric cart each embedded with a mechanism for transferring bobbins, which can be coupled so that the transport shaft is concentric with respect to the air chuck shaft. Accordingly, a bobbin mounted on the air chuck shaft or the transport shaft may be transferred from the air chuck shaft to the transport shaft and vice versa by operation of the first and second transfer mechanisms.

As such, by embedding electrically operated transfer mechanisms on the air chuck shaft and the transport shaft, respectively, heavy electrode rolls can be discharged from the air chuck shaft of the rewinder or loaded into the air chuck shaft of the unwinder without human intervention, thus enabling the electrode roll replacement system of the present disclosure to increase the amount of electrode rolls wound, freeing it from the weight limitations imposed by human intervention, thereby improving equipment utilization.

However, the technical effects of the present invention are not limited to those described above, and other effects not mentioned will be apparent to those of ordinary skill in the art from the description of the invention set forth below.

### [Brief Description of the Drawings]

Because the following drawings attached to the present specification illustrate exemplary embodiments of the present disclosure and serve to facilitate understanding of the technical idea of the present disclosure together with the detailed description of the disclosure described below, the present disclosure should not be construed as limited to the matters described in the drawings.
FIG. 1 is a drawing illustrating the overall configuration of an electrode roll replacement system according to the present disclosure.
FIG. 2 is a drawing illustrating one embodiment of an air chuck shaft.
FIG. 3 is a cross-sectional view along line "A-A" shown in FIG. 2.
FIG. 4 is a drawing illustrating one embodiment of a transport shaft of an electric cart.
FIG. 5 is a drawing illustrating the docking end of the air chuck shaft and transport shaft.
FIG. 6 is a drawing illustrating a state in which the electrode roll is replaced along an air chuck shaft and the transport shaft.
FIG. 7 is a drawing illustrating another embodiment of an air chuck shaft and a transport shaft.
FIG. 8 is a drawing illustrating one embodiment of a docking end for supplying power of a power source of the electric cart to the first transfer mechanism of the air chuck shaft.

### [Best Mode for Carrying out the Invention]

The present disclosure may have various modifications and various embodiments, and thus specific embodiments thereof will be described in detail below.

However, it should be understood that the present disclosure is not limited to the specific embodiments, and includes all modifications, equivalents, or alternatives within the spirit and technical scope of the present disclosure.
The terms "comprise," or "have" used herein designate the presence of characteristics, numbers, steps, actions, components, members or a combination thereof described in the specification, and it should be understood that the possibility of the presence or addition of one or more other characteristics, numbers, steps, actions, components, members, or a combination thereof is not excluded in advance.

In addition, in the present disclosure, when a part of a layer, film, region, plate, or the like is disposed "on" another part, this includes not only a case in which one part is disposed "directly on" another part, but a case in which still another part is interposed therebetween. In contrast, when a part of a layer, film, region, plate, or the like is disposed "under" another part, this includes not only a case in which the part is disposed "directly under" another part, but a case in which still another part is interposed therebetween. In addition, in the present application, "on" may include not only a case of being disposed on an upper portion but also a case of being disposed on a lower portion.

The present disclosure relates to an electrode roll replacement system, in one example includes: an air chuck shaft in the form of a cantilever, comprising a first transfer mechanism installed inside a hollow with the longitudinal direction of the shaft as the transfer direction, and exposing a first transfer surface of the first transfer mechanism on its surface; and an electric cart provided with a transportation shaft in the form of a cantilever, comprising a second transfer mechanism installed inside a hollow with the longitudinal direction of the shaft as the transfer direction, and exposing a second transfer surface of the second transfer mechanism on its surface, wherein the first and second transfer mechanisms are electrically operated to exchange bobbins between the air chuck shaft and the transport shaft, with the transport shaft of the electric cart concentrically aligned with the air chuck shaft.

The air chuck shaft provided in the unwinder or rewinder and the transport shaft of the electric cart each include a mechanism for transferring bobbins, and can be coupled (docked) such that the transport shaft is concentric with respect to the air chuck shaft. Accordingly, a bobbin mounted on the air chuck shaft or the transport shaft can be transferred from the air chuck shaft to the transport shaft and vice versa by the operation of the first and second transfer mechanisms.

As such, by embedding electrically operated transfer mechanisms on the air chuck shaft and the transport shaft, respectively, heavy electrode rolls can be discharged from the air chuck shaft of the rewinder, or loaded into the air chuck shaft of the unwinder, without human intervention, thereby enabling the electrode roll replacement system of the present disclosure to increase the amount of electrode rolls wound, freeing it from the weight limitations imposed by human intervention, and thereby improving equipment utilization.

### [Mode for Practicing the Invention]

Hereinafter, with reference to the accompanying drawings, a specific embodiment of an electrode roll replacement system 10 according to the present disclosure will be described in detail. For reference, the directions of front and back, up and down, and left and right designating relative positions used in the following description are intended to aid in the understanding of the disclosure, and refer to the directions shown in the drawings unless otherwise defined.

### [First embodiment]

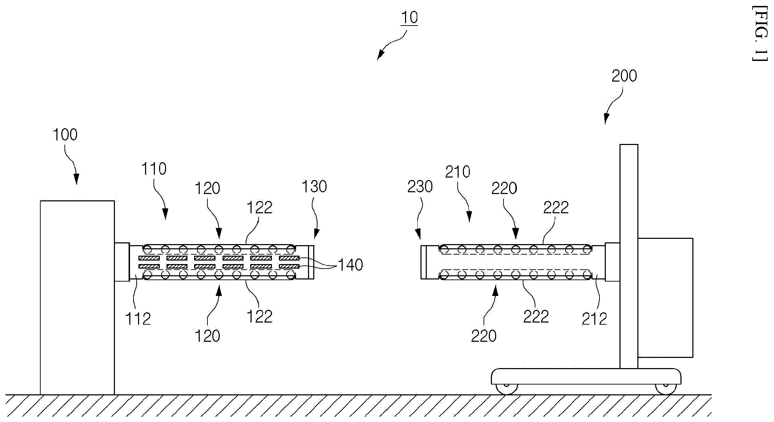

FIG. 1 is a drawing illustrating the overall configuration of an electrode roll replacement system 10 according to the present disclosure. The electrode roll replacement system 10 of the present disclosure includes an air chuck shaft 110 embedded with an electrically operated first transfer mechanism 120, and an electric cart 200 provided with a transport shaft 210 similarly embedded with an electrically operated second transfer mechanism 220. An electrode roll 500, i.e., an electrode roll 500 with electrodes 520 wound on a cylindrical bobbin 510, is inserted and mounted on the air chuck shaft 110 and the transport shaft 210. Thus, the air chuck shaft 110 and the transport shaft 210 have the same outer diameter corresponding to the inner diameter of the bobbin 510.

The air chuck shaft 110 is provided in the unwinder or rewinder 100in the form of a cantilever to allow insertion and discharge of the electrode roll 500. Similarly, a transport shaft 210 is provided in an electric cart 200 with traveling capabilities in the form of a cantilever, and the electrode roll 500 is mounted on the transport shaft 210 for moving. The electric cart 200 may be a cart operated by an operator, or it may be an automated guided vehicle (AGV).

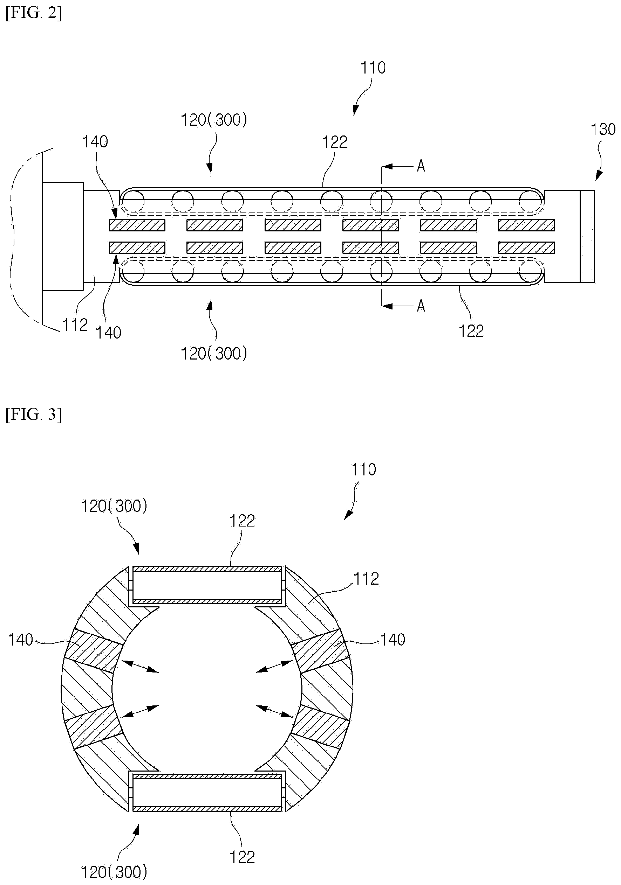

FIG. 2 is a drawing illustrating one embodiment of an air chuck shaft 110, and FIG. 3 is a cross-sectional view of the air chuck shaft 110 along line "A-A". The air chuck shaft 110 includes a first transfer mechanism 120 installed inside a hollow with the longitudinal direction of the shaft 112 as the transfer direction, and exposes a first transfer surface 122 of the first transfer mechanism 120 on its surface. In the embodiment shown in FIG. 2, the first transfer mechanism 120 is structured as a conveyor belt 300, with a surface of the conveyor belt 300 exposed outside of the shaft 112 to form the first transfer surface 122.

The first transfer mechanism 120 may include one or two or more conveyor belts 300, and if there is a plurality of conveyor belts 300, they may be uniformly disposed along the circumferential direction of the shaft 112. Also shown in FIGS. 2 and 3 is an air chucking rubber 140. The air chucking rubber 140 is a pneumatically actuated chucking mechanism that is capable of advance and retreat along the radial direction of the air chuck shaft 110. When pneumatic pressure is applied, the air chucking rubber 140 advances along the radial direction, and the advancing air chucking rubber 140 frictionally grips the inner circumferential surface of the bobbin 510, thereby chucking the electrode roll 500. Conversely, the chucking action is released when the pneumatic pressure is removed, and as this chucking action of the air chuck shaft 110 falls within the art known in the art, it will not be described further.

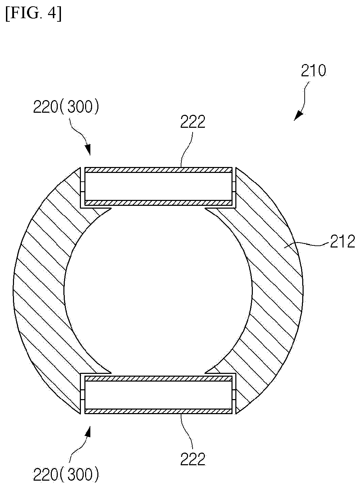

FIG. 4 is a drawing illustrating one embodiment of a transport shaft 210 of the electric cart 200. The transport shaft 210, which is mounted on the electric cart in the form of a cantilever, has substantially the same structure as the air chuck shaft 110 described above. That is, the transport shaft 210 includes a second transfer mechanism 220 installed inside a hollow with the longitudinal direction of the shaft 212 as the transfer direction, and a second transfer surface 222 of the second transfer mechanism 220 is exposed on a surface of the shaft 212.

However, the air chucking rubber 140 need not necessarily be provided on the transport shaft 210. The primary function of the air chucking rubber 140 provided on the air chuck shaft 110 is to securely fix the bobbin 510 so that the rotational drive force of the air chuck shaft 110 is fully transmitted to the electrode roll 500. In this respect, it is unlikely that the air chucking rubber 140 would be required to be provided on the non-rotationally driven transport shaft 210 unless there is a risk of the electrode roll 500 falling during transportation.

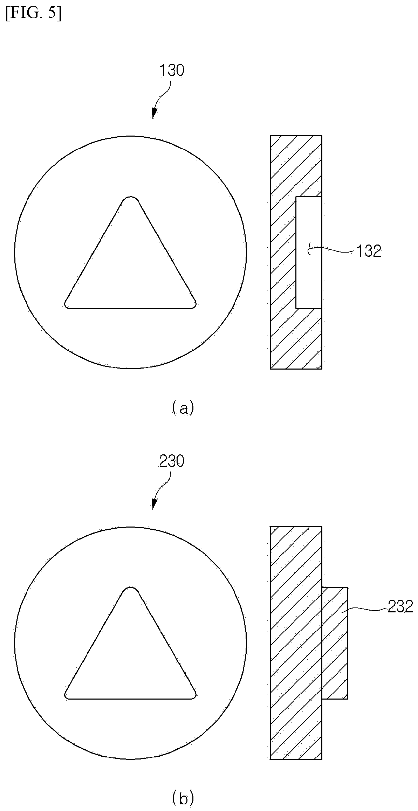

FIG. 5 is a drawing illustrating one embodiment of the docking ends 130, 230 of the air chuck shaft 110 and the transport shaft 210. As will be described later, movement of the electrode roll 500 is accomplished with the respective free ends of the air chuck shaft 110 and the transport shaft 210 concentrically aligned and in mutual contact or connection. As such, when the respective free ends of the air chuck shaft 110 and the transport shaft 210 are concentrically aligned and mutually coupled, and it is referred to as docking of the air chuck shaft 110 and the transport shaft 210, the respective free ends of the air chuck shaft 110 and the transport shaft 210 may be referred to as docking ends 130, 230.

As such, when the transport shaft 210 of the moving electric cart 200 is docked and interconnected with respect to the fixedly installed air chuck shaft 110, the relative position of the docking of the transport shaft 210 of the electric cart 200 with respect to the air chuck shaft 110 may be limited to a predetermined position. For example, as shown in FIG. 5, a groove structure 132 that determines the coupling direction can be provided on the docking end 130 of the air chuck shaft 110 {(a) of FIG. 5}, and a complementary protrusion structure 232 can be provided on the docking end 230 of the transport shaft 210 {(b) of FIG. 5}. Thereby, the first transfer surface 122 of the air chuck shaft 110 and the second transfer surface 222 of the transport shaft 210 can be aligned in a row.

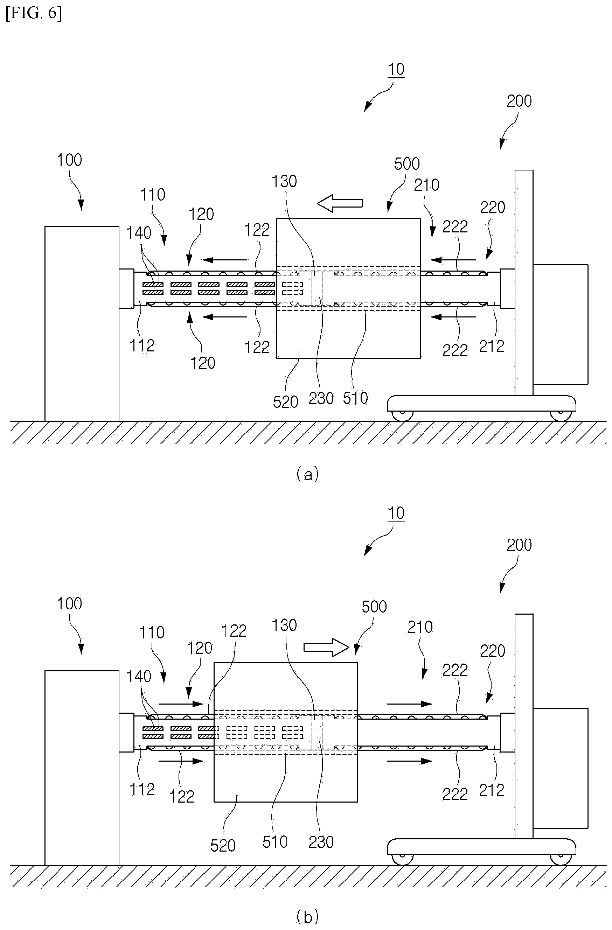

FIG. 6 is a drawing illustrating a replacement of the electrode rolls 500 along the air chuck shaft 110 and the transport shaft 210. When the air chuck shaft 110 and the transport shaft 210 are connected in a row, the electrode roll 500 located on either the air chuck shaft 110 or the transport shaft 210 is moved to the other side by electrically operation of the first and second transfer mechanisms 120, 220.

(a) of FIG. 6 illustrates an example of removing a blank bobbin 510 from an air chuck shaft 110 provided in an unwinder 100 and mounting new electrode rolls 500 transported on the electric cart 200. After the docking ends 130, 230 of the air chuck shaft 110 and the transport shaft 210 are connected, the first transfer mechanism 120 and the second transfer mechanism 220 move the first and second transfer surfaces 122, 222 from right to left, based on the drawings, thereby moving the electrode roll 500 on the transport shaft 210 onto the air chuck shaft 110. In the embodiment shown, the first and second transfer mechanisms 120, 220 are a conveyor belt 300, wherein the movement of the electrode roll 500 is caused by frictional forces acting between the conveyor belt 300 and the inner circumferential surface of the bobbin 510.

(b) of FIG. 6 is the reverse case, illustrating an example of transferring an electrode roll 500, which has been wound on an air chuck shaft 110 provided in the rewinder 100, to an electric cart 200. After the docking ends 130, 230 of the air chuck shaft 110 and the transport shaft 210 are connected, the first transfer mechanism 120 and the second transfer mechanism 220 move the first and second transfer surfaces 122, 222 from left to right, based on the drawings, and the electrode rolls 500 on the air chuck shaft 110 are moved to the transport shaft 210 accordingly.

It is certain that the first and second transfer mechanisms 120, 220 operate in opposite directions during the opposing transfer of supplying or removing the electrode roll 500 with respect to the air chuck shaft 110. And, as illustrated in FIG. 5, when the docking position of the transport shaft 210 with respect to the air chuck shaft 110 is limited to a predetermined position, such that the first transfer surface 122 of the air chuck shaft 110 and the second transfer surface 222 of the transport shaft 210 are aligned, the driving forces of the first and second transfer mechanisms 120, 220 to move the electrode roll 500 are smoothly spread, resulting in a stable transfer.

### [Second embodiment]

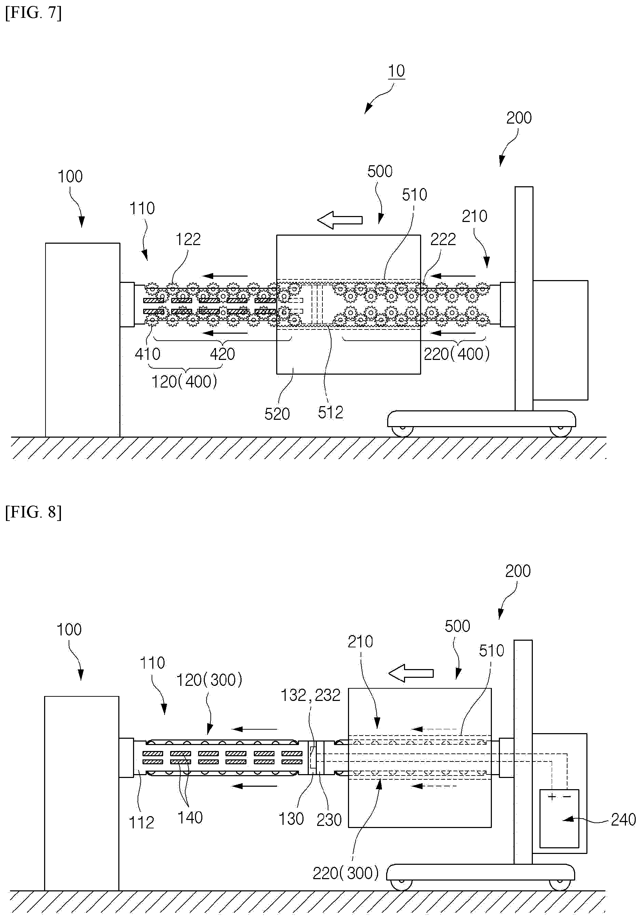

FIG. 7 is a drawing illustrating another embodiment of the air chuck shaft 110 and transport shaft 210, wherein the first and second transfer mechanisms 120, 220 are configured as gear mechanisms rather than conveyor belts 300.

While FIG. 7 illustrates an air chuck shaft 110, it will be appreciated that the structure of FIG. 7 can be adapted to a transport shaft 210, as will become apparent from the description of the first embodiment. Further, FIG. 7 omits the air chucking rubber 140 provided on a conventional air chuck shaft 110, and it will be appreciated that this omission will not significantly impair the understanding of the present disclosure.

In the embodiment of FIG. 7, the first transfer mechanism 120 embedded in the air chuck shaft 110 is a plurality of pinion gears 400, and the teeth of the pinion gears protruding out of the air chuck shaft 110 form a first transfer surface 122. Correspondingly, a rack gear 512 is formed on the inner circumferential surface of the bobbin 510, and movement of the bobbin 510 occurs by successive engagement of the rack gear 512 on the inner circumferential surface of the bobbin 510 with respect to the rotationally driving pinion gears 400.

Here, the plurality of pinion gears 400 may include at least one drive gear 410, and at least one driven gear 420 passively rotating in direct or indirect engagement with the drive gear 410. The plurality of pinion gears 400 is disposed in a row along the longitudinal direction of the air chuck shaft 110, with the pinion gears 400 forming the first transfer surface 122 protruding alternately one by one. For example, odd-numbered pinion gears 400 or even-numbered pinion gears 400 may form the first transfer surface 122 along the longitudinal direction of the shaft 112. This is because the rotational directions of the successively engaged pinion gears 400 are alternately clockwise and counterclockwise direction, and thus it is necessary to form the first transfer surface 122 in which pinion gears 400 rotating in the same direction in order to transfer the bobbin 510.

For reference, although not shown in FIG. 7, the plurality of pinion gears 400 may be mounted within a single frame structure, such as a gearbox, which may simplify installation of the plurality of pinion gears 400 within the air chuck shaft 110. Additionally, as shown in FIG. 5, the docking ends 130, 230 may be provided with a structure that limits the coupling direction to ensure that the first and second transfer surfaces 122, 222 are aligned in a row to ensure that the rack gears 512 on the inner circumferential surface of the bobbin 510 are continuously engaged with respect to the first and second transfer mechanisms 120, 220.

### [Third embodiment]

The third embodiment relates to an exemplary embodiment of powering the first and second transfer mechanisms 120, 220. In the simplest case, the first and second transfer mechanisms 120, 220 can be powered by a power source independent of each other. That is, the first transfer mechanism 120 can be powered by the power source (not shown) of the unwinder/rewinder 100 on which the air chuck shaft 110 is installed, while the second transfer mechanism 220 can be powered by the power source 240 of the electric cart 200 provided with the transport shaft 210.

However, since the air chuck shaft 110 is embedded with the air chuck mechanism and the shaft 112 rotates to rotate the electrode roll 500, the structure of the power supply to the interior of the air chuck shaft 110 may be somewhat complicated. FIG. 8 is an exemplary drawing of the third embodiment, in which power of the power source 240 from the electric cart 200 is supplied to the first transfer mechanism 120 of the air chuck shaft 110 to further simplify the internal structure of the air chuck shaft 110.

FIG. 8 is a drawing illustrating one embodiment of docking ends 130, 230 for supplying power of the power source 240 of the electric cart 200 to the first transfer mechanism 120 of the air chuck shaft 110, power of the power source 240 of the electric cart 200 can be supplied to the first transfer mechanism 120 by docking the transport shaft 210 of the electric cart 200 with respect to the air chuck shaft 110. For example, the docking end 130 of the air chuck shaft 110 forms a groove structured outlet 132 and the docking end 230 of the transport shaft 210 forms a protrusion structured plug 232, such that the air chuck shaft 110 and the transport shaft 210 form a mechanical connection as well as an electrical connection. Accordingly, power of the power source 240 of the electric cart 200 can be supplied to the first transfer mechanism 120 as well as the second transfer mechanism 220.

In the exemplary embodiment illustrated in FIG. 8, the docking position of the transport shaft 210 relative to the air chuck shaft 110 is limited to a predetermined position by groove and protrusion structures 132, 232 that specify the coupling direction, which allows power of the power source 240 of the electric cart 200 being supplied to the first transfer mechanism 120 and the first transfer surface 122 and the second transfer surface 222 being aligned.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present disclosure.

### [Description of Reference Numerals]

10: ELECTRODE ROLL REPLACEMENT SYSTEM
100: UNWINDER/REWINDER
110: AIR CHUCK SHAFT
112: SHAFT
120: FIRST TRANSFER MECHANISM
122: FIRST TRANSFER SURFACE
130: DOCKING END
132: GROOVE STRUCTURE (OUTLET)
140: AIR CHUCKING RUBBER
200: ELECTRIC CART
210: TRANSPORT SHAFT
212: SHAFT
220: SECOND TRANSFER MECHANISM
222: SECOND TRANSFER SURFACE
230: DOCKING END
232: PROTRUSION STRUCTURE (PLUG)
240: POWER SOURCE
300: CONVEYOR BELT
400: PINION GEAR
410: DRIVE GEAR
420: DRIVEN GEAR
500: ELECTRODE ROLL
510: BOBBIN
512: RACK GEAR
520: ELECTRODE

## Claims

1. An electrode roll replacement system comprising:
an air chuck shaft in the form of a cantilever, comprising a first transfer mechanism installed inside a hollow with a longitudinal direction of a shaft as a transfer direction, and exposing a first transfer surface of the first transfer mechanism on its surface; and
an electric cart provided with a transportation shaft in the form of a cantilever, comprising a second transfer mechanism installed inside a hollow with a longitudinal direction of a shaft as a transfer direction, and exposing a second transfer surface of the second transfer mechanism on its surface, wherein
the first and second transfer mechanisms are electrically operated to exchange bobbins between the air chuck shaft and the transport shaft, with the transport shaft of the electric cart concentrically aligned with the air chuck shaft.

2. The electrode roll replacement system of claim 1, wherein
the first and second transfer mechanisms are each a conveyor belt, wherein
movement of the bobbin occurs by frictional forces acting between the conveyor belt and an inner circumferential surface of the bobbin.

3. The electrode roll replacement system of claim 1, wherein
the first and second transfer mechanisms are each a plurality of pinion gears, wherein
movement of the bobbin occurs by engagement of the pinion gear with a rack gear formed on an inner circumferential surface of the bobbin.

4. The electrode roll replacement system of claim 3, wherein
the plurality of pinion gears comprises:
at least one drive gear and at least one driven gear rotating in direct or indirect engagement with the drive gear.

5. The electrode roll replacement system of claim 4, wherein
the plurality of pinion gears is disposed in a row along a longitudinal direction of the shaft, wherein
odd-numbered pinion gears or even-numbered pinion gears form the first and second transfer surfaces.

6. The electrode roll replacement system of claim 2 or 3, wherein
the transport shaft of the electric cart is docked and interconnected with the air chuck shaft, wherein
the relative position of docking of the air chuck shaft with the transport shaft of the electric cart is limited to a predetermined position, and the first and second transfer surfaces are aligned accordingly.

7. The electrode roll replacement system of claim 1, wherein
the first and second transfer mechanisms are powered by power sources independent of each other.

8. The electrode roll replacement system of claim 1, wherein
power to operate the first and second transfer mechanisms is supplied from a power source of the electric cart.

9. The electrode roll replacement system of claim 8, wherein
by docking the transport shaft of the electric cart with the air chuck shaft, power of a power source from the electric cart is supplied to the first transfer mechanism.

10. The electrode roll replacement system of claim 9, wherein
the relative position of docking of the air chuck shaft with the transport shaft of the electric cart is limited to a predetermined position, wherein
the first and second transfer surfaces are aligned and power of the power source from the electric cart is supplied to the first transfer mechanism by the docking of the air chuck shaft with the transport shaft of the electric cart.
